# FASCICULE DE BREVET EUROPEEN

(11) **EP 0 512 972 B1**
(45) Date de publication et mention de la délivrance du brevet: **10.01.1996**
(21) Numéro de dépôt: 92870066.5
(22) Date de dépôt: 04.05.1992
(51) Int. Cl.: B23K 11/25

(54) **Procédé de contrôle d'une soudure bout à bout de bandes métalliques**
Verfahren zur Überwachung einer Stumpfnaht zwischen Metallbändern
Method of monitoring a butt weld between metal strips

(30) Priorité: 06.05.1991 BE 9100421
(43) Date de publication de la demande: 11.11.1992
(73) Titulaire: CENTRE DE RECHERCHES METALLURGIQUES CENTRUM VOOR RESEARCH IN DE METALLURGIE Association sans but lucratif, B-1040 Bruxelles (BE)
(72) Inventeur: Pirlet, Robert, B-4053 Embourg (BE); Schyns, Marc, B-4851 Gemmenich (BE)
(74) Mandataire: Lacasse, Lucien Emile

(56) Documents cités:
- GB-A- 2 134 670
- US-A- 4 365 307
- PATENT ABSTRACTS OF JAPAN vol. 13, no. 527 (P-965)24 Novembre 1989 & JP-A-12 16 246 (TANAKA KIKINZOKU KOGYO) 30 Aout 1989
- PATENT ABSTRACTS OF JAPAN vol. 14, no. 540 (M-1053)29 Novembre 1990 & JP-A-22 29 680 (NISSAN MOTOR CO LTD) 12 Septembre 1990
- DATABASE WPIL Section Ch, Week 8522, Derwent Publications Ltd., London, GB; Class M23, AN 85-132843 & JP-A-52 135 847 (HITACHI) 14 Novembre 1977
- PATENT ABSTRACTS OF JAPAN vol. 9, no. 279 (M-427)7 Novembre 1985 & JP-A-60 121 086 (KAWASAKI SEITETSU KK) 28 Juin 1985
- DATABASE WPIL Section Ch, Week 8348, Derwent Publications Ltd., London, GB; Class M23, AN 83-831848 & SU-A-99 475 (BORISOV O. ET AL.) / Février 1983

## Description

La présente invention concerne un procédé de contrôle de la qualité d'une soudure bout à bout de bandes métalliques selon le préambule de la revendication 1.

Il convient d'indiquer d'emblée que le terme "bande métallique" est utilisé d'une manière générique, dans la présente invention, pour désigner des produits plats, laminés à chaud ou à froid, dont l'épaisseur est inférieure à 10 mm et est de préférence comprise entre 0,2 mm et 5 mm. Ces produits peuvent se présenter sous la forme de bandes, généralement enroulées en bobines, mais aussi sous forme de tôles individuelles de dimensions quelconques. Ils sont de préférence en acier, mais ils peuvent également être en tout autre métal ou alliage métallique soudable.

Parmi les nombreuses applications qui font appel au soudage bout à bout de bandes métalliques, la description qui va suivre sera plus spécialement consacrée à l'assemblage de bandes d'acier en un ruban ininterrompu destiné à un processus continu.

A l'heure actuelle, on utilise de plus en plus des processus continus pour la fabrication ou le traitement de bandes métalliques, en particulier de bandes d'acier. A titre d'exemple, on citera notamment le laminage, le décapage, le recuit et le revêtement des bandes. Pour permettre la mise en oeuvre de ces processus continus, il est de pratique courante d'assembler les bandes individuel les bout à bout par soudage, de façon à former une bande continue, de longueur théoriquement illimitée. La qualité des soudures d'assemblage des bandes joue un rôle capital dans le bon déroulement de ces processus continus. En effet, elle conditionne la résistance de la bande continue aux efforts de traction longitudinale qui assurent la progression de celle-ci.

Actuellement, ces soudures sont contrôlées de façon rudimentaire au niveau industriel. Ce contrôle consiste fréquemment en un rapide examen visuel, éventuellement accompagné d'un essai mécanique, tel qu'un test de percussion ou un essai Erichsen. Cet examen est effectué par un opérateur et présente dès lors des risques d'erreur et d'incertitude; il ne fournit aucune information sur la santé interne de la soudure. Il en résulte qu'en l'absence d'un contrôle objectif et fiable des soudures, il se produit des ruptures de bande qui provoquent des arrêts de longue durée des installations de production. En outre, le manque de confiance dans la qualité des soudures entraîne un ralentissement des lignes de fabrication ou de traitement.

On a déjà proposé, par la demande de brevet LU-A-87756, un procédé de contrôle d'une soudure de ce type basé sur l'utilisation d'impulsions ultrasonores. Ce procédé n'élimine cependant pas entièrement les risques d'erreur ou d'incertitude, notamment en raison de sa sensibilité à la fréquence des ondes utilisées et à leur mode de propagation dans la soudure.

La présente invention a pour but de remédier aux inconvénients précités, au moyen d'un procédé de contrôle thermographique à chaud des soudures d'assemblage bout à bout de bandes métalliques.

Conformément à la présente invention, un procédé de contrôle de la qualité d'une soudure bout à bout de bandes métalliques, dans lequel on réalise la soudure suivant une direction transversale par rapport à l'axe longitudinal des bandes, est caractérisé en ce qu'après la réalisation de ladite soudure, on établit une carte thermique de ladite soudure et de la zone thermiquement affectée au voisinage de ladite soudure et en ce que l'on vérifie que la température d'au moins une majorité de points de ladite carte thermique est comprise entre une valeur maximale et une valeur minimale prédéterminées, propres à chacun desdits points.

En principe, la carte thermique de la soudure peut être établie par toute méthode appropriée connue en soi dans la technique; une telle carte thermique est par exemple représentée dans l'envisage "La Thermographie Infrarouge", Technique et Documentation Lavoisier, 3' édition, 1989.

Dans le cadre de la présente invention, il s'est avéré intéressant de mesurer, à des instants prédéterminés après la réalisation de la soudure, la température d'une pluralité de plages de ladite soudure et de la Zone thermiquement affectée au voisinage de ladite soudure, et d'établir la carte thermique de ladite soudure et de la zone thermiquement affectée au voisinage de ladite soudure à partie des valeurs mesurées de la température de ladite pluralité de plages.

Selon une mise en oeuvre particulière, on effectue un balayage transversal du cordon de soudure, cette direction transversale étant rapportée à la direction du cordon, en une pluralité de points répartis le long dudit cordon et avec un retard aussi court que possible par rapport à la soudure auxdits points, et on mesure la température d'une pluralité de plages situées sur la trajectoire dudit balayage.

L'étendue desdites plages de mesure peut être modifiée et rendue aussi petite qu'on le désire, en fonction de la résolution de l'appareil de mesure, et de la précision désirée de la carte thermique établie par cette méthode.

Idéalement, la soudure progresse suivant une ligne droite, perpendiculaire à l'axe longitudinal des bandes; cette ligne droite est en principe matérialisée par la ligne de jonction de deux bandes successives. Idéalement toujours, le profil de température transversal de la soudure - c'està-dire le profil suivant une direction perpendiculaire à la ligne de jonction précitée - est symétrique par rapport à cette ligne de jonction et le lieu géométrique des températures maximales de l'ensemble de ces profils coïncide avec la ligne de jonction précitée.

Dans la pratique cependant, les conditions peuvent être différentes de ces conditions idéales, d'une part parce que les bandes à joindre peuvent présenter un certain recouvrement et d'autre part parce que la qualité et la régularité de la soudure peuvent être affectées par divers facteurs, notamment géométriques, mécaniques, électriques ou thermiques.

Selon une caractéristique particulière du procédé de l'invention, on détermine, en des points successifs répartis le long de la soudure, une pluralité de profils transversaux de température de la soudure et de la zone thermiquement affectée au voisinage de ladite soudure, on compare lesdits profils mesurés à au moins un profil de température de référence et on produit un signal indiquant que l'écart entre au moins un desdits profils mesurés et au moins un desdits profils de référence atteint ou dépasse une valeur prédéterminée.

En particulier, lesdits profils de température transversaux sont déterminés à des intervalles de temps prédéterminés, de préférence réguliers. De même, ces profils sont déterminés avec un retard aussi constant que possible par rapport à l'exécution de la soudure aux points respectifs considérés; ce retard sera lui-même aussi court que possible, pour minimiser le refroidissement de la soudure avant la mesure.

Selon des caractéristiques supplémentaires du procédé de l'invention, la comparaison desdits profils de température transversaux peut porter sur différents paramètres déterminants de ces profils, tels que:
- la valeur maximale de la température desdits profils, considérés individuellement;
- la largeur des profils à différents niveaux de température;
- la position du point correspondant à la valeur maximale de la température desdits profils, considérés individuellement;
- la symétrie des profils par rapport au point correspondant à la valeur maximale de la température des profils respectifs;
- la déformation des profils par rapport à au moins un profil de références.

Une autre caractéristique du procédé de l'invention consiste à déterminer le profil longitudinal des températures maximales le long de la soudure, ainsi que la position de ce profil par rapport à la soudure, en particulier par rapport à l'axe médian du champ de mesure de la soudure.

Selon une caractéristique supplémentaire du procédé de l'invention, on compare ledit profil longitudinal des températures maximales, respectivement la position de ce profil, à un profil longitudinal de référence, respectivement à une position de référence de ce profil longitudinal, et on produit un signal indiquant que l'écart entre le profil longitudinal déterminé et le profil longitudinal de référence, respectivement entre la position déterminée et la position de référence de ce profil longitudinal, atteint ou dépasse une valeur prédéterminée.

Le profil longitudinal de référence des températures maximales peut notamment être une droite d'ordonnée préfixée, correspondant à un niveau de température prédéterminé. Cette ordonnée peut être déterminée par tout moyen approprié, en particulier par un système expert tenant compte de la nature et des épaisseurs respectives des bandes à assembler, ainsi que des conditions de soudage à appliquer, dont la connaissance empirique résulte de la pratique industrielle.

Ce profil longitudinal des températures maximales peut également être soumis à différents traitements connus en soi, par exemple à un lissage.

En particulier, le profil longitudinal des températures maximales peut être subdivisé en plusieurs tronçons ou profils partiels, qui subissent alors individuellement les traitements mentionnés plus haut pour le profil longitudinal complet. Par exemple, chaque tronçon peut comprendre un nombre constant de profils individuels et on peut déterminer pour celui-ci la température maximale moyenne, qui sera alors considérée comme la température maximale dudit tronçon et qui servira à déterminer un profil longitudinal lissé des températures maximales de la soudure.

On va maintenant décrire en détail une mise en oeuvre particulière du procédé de l'invention, en faisant référence aux dessins annexés, dans lesquels la
- Fig. 1: montre schématiquement une machine de soudage de bandes bout à bout; la
- Fig. 2: illustre (a) l'évolution des profils transversaux de température de la soudure et (b) la carte thermique d'un cordon de soudure; la
- Fig. 3: représente un profil transversal individuel au moment de la fusion impliquant la température maximale; la
- Fig. 4: représente un profil de température individuel après la soudure; la
- Fig. 5: est un double diagramme montrant (a) l'évolution des températures maximales le long de la soudure ainsi que leur valeur moyenne, et (b) les coordonnées des points correspondant à ces températures maximales; la
- Fig. 6: montre l'effet d'un défaut d'alignement des extrémités des bandes sur le profil des températures maximales le long de la soudure; et la
- Fig. 7: montre l'influence de la propreté de la surface des bandes sur le profil des températures maximales le long de la soudure.

Les mesures ont été effectuées au moyen d'un système de détection thermographique infrarouge, capable d'assurer une fréquence de balayage élevée et offrant une excellente résolution spatiale.

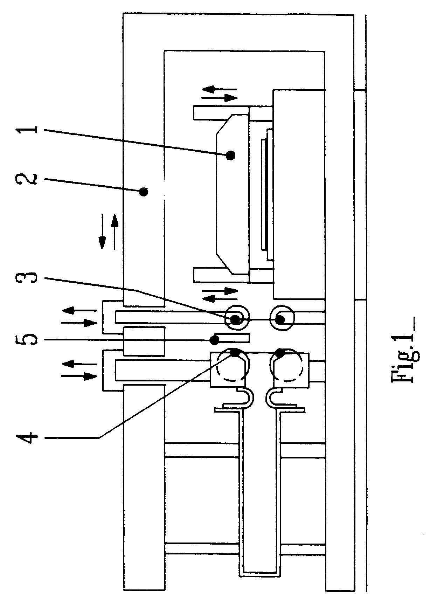

Le système de détection était monté sur une machine de soudage de bandes du type connu illustré dans la Figure 1. Il s'agit d'une soudeuse à molettes, installée dans une ligne de recuit continu où elle assure la jonction des bandes successives par raboutage de bobines en acier laminé à froid. Les épaisseurs et les largeurs des bandes assemblées variaient respectivement de 0,35 mm à 1,8 mm et de 600 mm à 1600 mm.

La machine de soudage schématisée dans la Figure 1 comprend essentiellement une cisaille 1, disposée sur la trajectoire de la bande, et un cadre 2 mobile transversalement par rapport à la bande. La bande à souder se déplace perpendiculairement au plan du dessin. Le cadre mobile 2 porte une première paire de galets 3, qui sont des galets de planage, et une seconde paire de galets 4, qui sont des galets de soudage. Les deux galets 3, 4 supérieurs sont mobiles verticalement, pour tenir compte de l'épaisseur des bandes à souder.

Le fonctionnement d'une telle machine de soudage est bien connu des hommes du métier. Il suffira de le rappeler brièvement ici. La première bande à souder vient se positionner dans la cisaille 1, qui rogne l'extrémité arrière de cette bande afin de lui donner un bord rectiligne. Une seconde bande, qui suit la première, est à son tour cisaillée à son extrémité de tête, et elle vient se positionner par rapport à l'extrémité arrière de la première bande. Les bandes peuvent être positionnées bout à bout ou présenter un certain recouvrement; leur zone de jonction est normalement située sur la trajectoire des galets 3, 4.

Lorsque les bandes à souder sont en place, le cadre mobile 2 se met en mouvement de gauche à droite, dans la Figure 1, et les galets de planage 3, suivis des galets de soudage 4, roulent sur la zone de jonction des bandes, sur toute la largeur de celles-ci, en une course d'aller dans laquelle le planage précède le soudage. A la fin de cette course d'aller, le mouvement du cadre mobile 2 s'inverse, et celui-ci effectue une course de retour, au cours de laquelle le planage suit le soudage. A la fin de la course de retour, le cadre mobile 2 est revenu dans sa position initiale; les bandes sont soudées l'une à l'autre et la bande continue ainsi obtenue est envoyée dans le processus continu qui suit, jusqu'à ce qu'il soit nécessaire de pratiquer la soudure suivante à la fin de cette bande.

Pendant la course d'aller du cadre mobile 2, les galets de planage 3 ont pour effet d'éliminer une éventuelle surépaisseur des bandes par laminage de leurs extrémités superposées. Durant la course de retour, les galets de planage réalisent un forgeage de la soudure, ce qui peut perturber le niveau et la distribution de la température dans la soudure. La température du cordon après le planage peut donc être insuffisamment représentative de la qualité de la soudure. Il est dès lors préférable de mesurer la température du cordon de soudure entre le soudage et le planage pendant la course de retour du cadre 2. A cet effet, l'appareil de thermographie 5 sera placé entre les galets de planage 3 et les galets de soudage 4. Par ailleurs, une scrutation trop proche du point de soudure peut entraîner une sensibilité excessive à des perturbations qui ne sont pas toujours nuisibles à la qualité de la soudure, par exemple à des étincelles. Par contre, une mesure plus éloignée du point de soudure peut être peu sensible à des variations de température significatives pour la soudure, en raison de la diffusion rapide de la chaleur dans la soudure et dans la zone voisine et du refroidissement local qui en résulte. Pour tenir compte de ces conditions, il est préférable que les mesures de température soient réalisées à moins de 150 mm, et de préférence à environ 100 mm, en amont du point de soudage, dans la course de retour. Cette distance permet de tenir compte de l'encombrement des galets de soudage 4 et de l'appareil de thermographie 5. Le cas échéant, le point de mesure peut être visé en interposant un miroir réfléchissant entre ce point et l'appareil de mesure.

Le champ instantané du détecteur de l'appareil de mesure 5 est animé d'un mouvement de balayage transversat, connu en soi, afin de relever le profil transversal de la température de la soudure et de la zone thermiquement affectée au voisinage de celle-ci. Combiné au mouvement du cadre mobile 2 le long de la soudure, le balayage transversal permet de relever plusieurs profils de température transversaux successifs, qui ensemble constituent une carte thermique de la soudure et de la zone thermiquement affectée au voisinage de celle-ci.

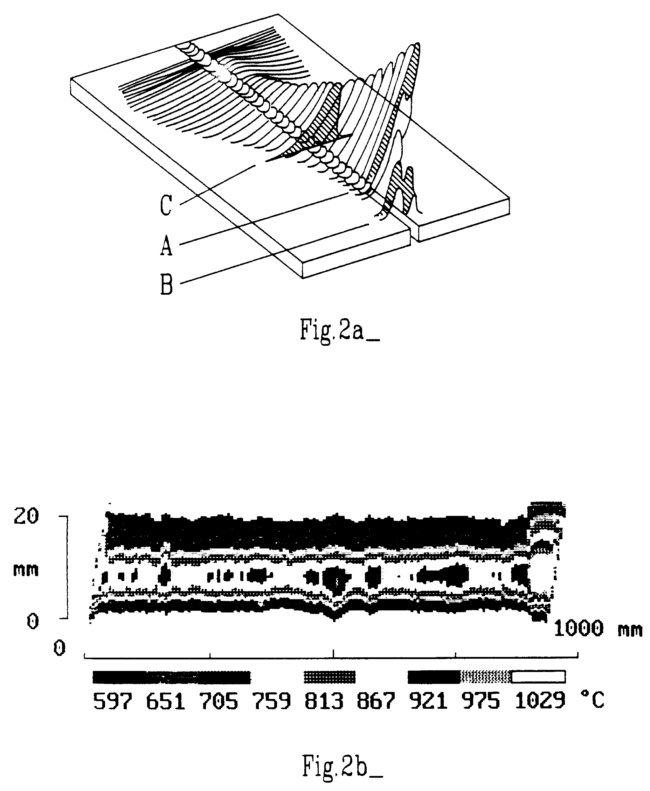

A un instant quelconque de l'opération de soudage, on relève le profil de température à l'endroit de la soudure; ce profil correspond au maximum de la température à cet instant. Il est indiqué par le point A dans le tracé de la Figure 2. Au même instant, en avant du point de soudure, par exemple en B, les bandes s'échauffent par conduction et la température commence à augmenter; en arrière du point de soudure, par exemple en C, la chaleur apportée par le soudage se propage dans les bandes, le profil s'aplatit et s'élargit de manière continue à mesure que l'on s'éloigne du point A. La Figure 2a représente donc, en trois dimensions, une carte thermique de la soudure et de la zone thermiquement affectée au voisinage de celle-ci à l'instant où le soudage est effectué au point A. Une carte thermique analogue peut être dressée pour toute position occupée par le point A le long de la soudure. La carte thermique peut plus couramment être présentée, comme le montre la Fig. 2b, par une succession de valeurs de température mesurées au fur et à mesure du soudage, le long du profil transversal (balayage du champ) et le long de la soudure. Des zones de même représentation dans cette Fig. 2b (hachures ou pointillés) sont isothermes entre les limites indiquées sur l'échelle graduée qui accompagne la carte thermique; cette échelle indique les valeurs minimum et maximum de chaque zone.

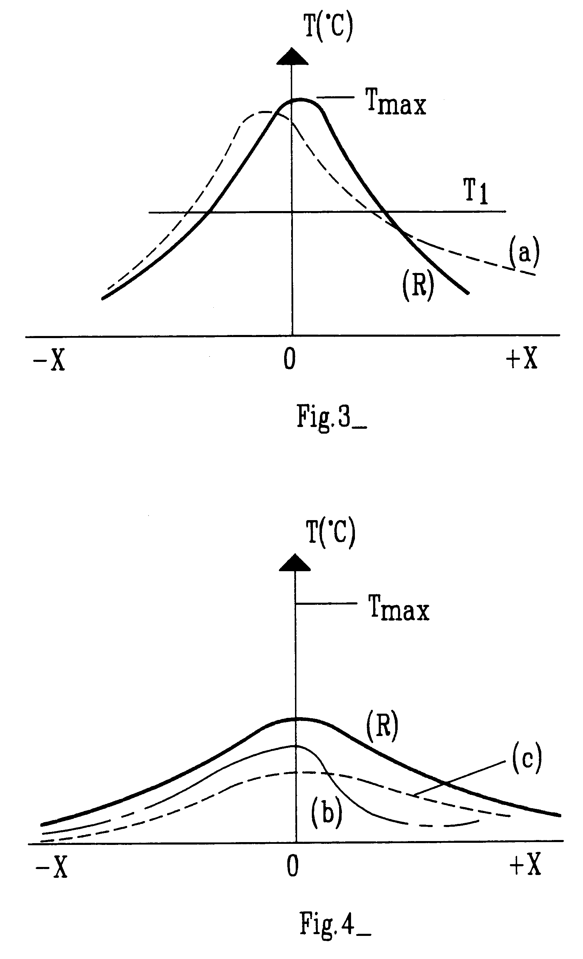

La Figure 3 représente un profil transversal de température en un point A de la Figure 2; l'axe vertical indique les températures en °C et l'axe horizontal indique les distances par rapport au point de soudure, de part et d'autre de celle-ci, transversalement à la soudure. En principe, la distribution des températures dans la soudure et dans la zone thermiquement affectée au voisinage de celle-ci est symétrique par rapport à la température maximum régnant au point de soudure; de ce fait, le profil est symétrique par rapport à l'axe des températures.

La Figure 4 représente un profil transversal de température, analogue à celui de la Figure 3, mais relevé en un point C de la Figure 2. On constate d'une part que la valeur maximum de la température de ce profil est nettement inférieure à celle du profil de la Figure 3, et d'autre part que le profil est aplati, par suite de la propagation de la chaleur qui tend à égaliser les températures.

Dans ces Figures 3 et 4, on a tracé en traits interrompus, des profils déformés par rapport aux profils de référence (R) en trait plein.

Dans la Figure 3, le profil déformé (a) est déporté vers la gauche et il ne présente donc plus une parfaite symétrie par rapport à l'axe médian de la soudure. De plus, la largeur du profil au niveau d'une température prédéterminée, par exemple T₁, est modifiée dans des proportions qui peuvent entraîner une dégradation inacceptable de la qualité de la soudure. De même, la température maximale du profil déformé (a) est inférieure à celle du profil de référence (R). Une température maximale trop basse au point de soudure peut résulter d'un réglage ou d'un fonctionnement incorrect de la machine de soudage et conduire à une soudure de mauvaise qualité.

Dans la Figure 4, le profil en traits mixtes (b) est nettement déformé par rapport au profil de référence, en ayant perdu toute symétrie et en présentant une température maximale sensiblement inférieure à celle du profil de référence (R). Ce type de déformation peut être le signe d'un refroidissement irrégulier qui peut compromettre la qualité de la soudure. Le profil (c), tracé en traits interrompus, reste symétrique mais est nettement inférieur au profil de référence (R), ce qui peut être le signe d'un refroidissement trop rapide de la soudure.

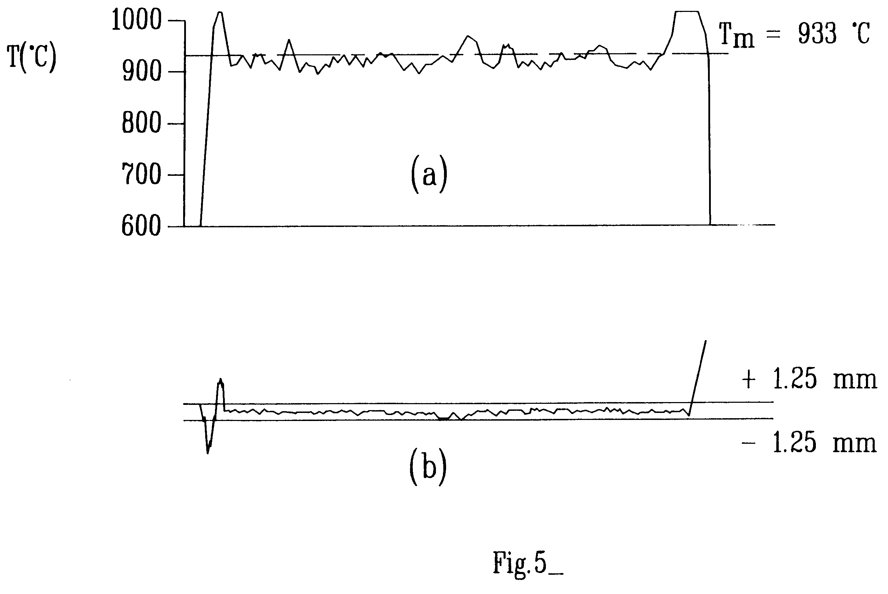

La Figure 5 concerne la distribution de la température suivant la longueur (L) de la soudure. Dans la Figure 5a, on a représenté l'évolution usuellement appelée profil longitudinal des températures maximales relevées en chaque point de mesure le long du cordon de soudure, donc en chaque position du point A de la Figure 2. On observe que la température maximum reste comprise entre environ 900°C et 975°C, avec une température moyenne de 933°C. Les valeurs plus élevées observées aux deux extrémités de la soudure ne sont pas significatives, car elles sont dues à la proximité des bord des bandes, qui perturbe la propagation de la chaleur.

Il est possible de vérifier, au moyen de ce profil longitudinal, que la température maximale de la soudure est, en tout point ou au moins en un nombre suffisant de points de la soudure comprise entre deux valeurs limites; à cet égard, il convient de souligner que la valeur limite la plus significative est la valeur inférieure, qui risque d'être insuffisante pour réaliser une bonne soudure.

La Figure 5b indique la variation, dans la direction longitudinale des bandes, de la position du point où l'on a relevé la température maximum de la soudure, pour chacun des profils correspondants aux points A successifs. La position des points successifs est rapportée à l'axe médian du champ de mesure de la soudure. On constate que, dans l'exemple illustré, la température maximale reste pratiquement centrée sur l'axe le long de la soudure. Une déviation marquée de ce diagramme peut exprimer un mauvais positionnement des bandes ou un mauvais serrage de bandes dans la machine de soudage.

Le profil longitudinal des températures maximales présenté dans la Figure 5a permet encore de déceler diverses imperfections, telles qu'un défaut d'alignement des bandes ou une propreté insuffisante de ces bandes, qui compromettent l'obtention d'une soudure de bonne qualité.

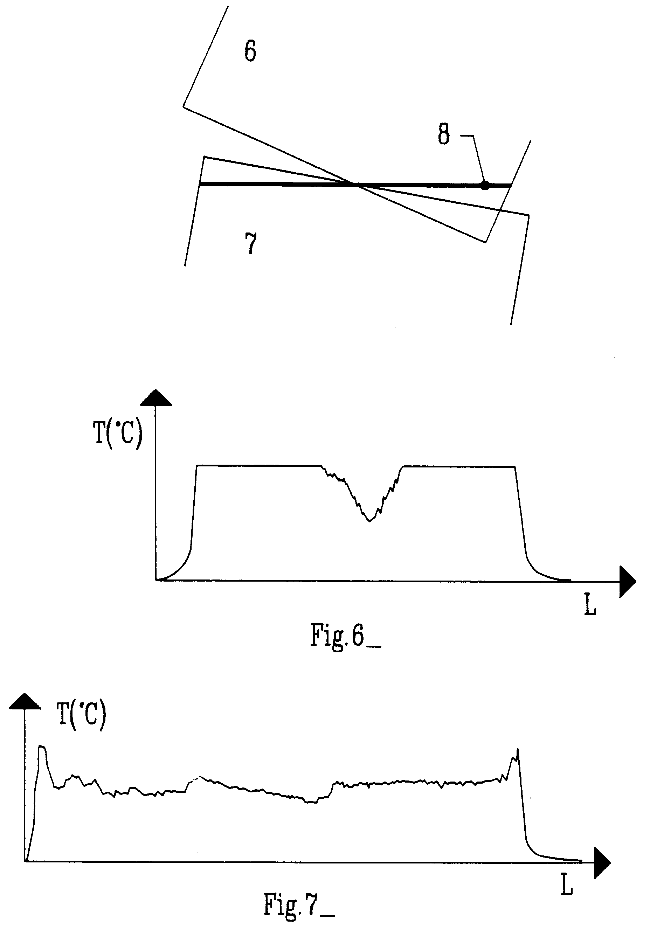

La Figure 6 illustre la détection d'un défaut d'alignement des bandes à l'assemblage. La partie (a) de la Figure montre, de façon exagérée, deux bandes (6, 7) dont les bords à assembler sont croisés au lieu d'être joints bout à bout ou de présenter un recouvrement sensiblement constant. On a également indiqué la trace (8) du cordon de soudure déposé transversalement par la machine de soudage de la Figure 1. Le profil longitudinal des températures maximales de ce cordon présente deux portions horizontales correspondant aux trajets respectifs de la machine de soudage sur les deux bandes; ces portions sont séparées par un creux très net qui traduit une chute de la température maximale dans la zone du croisement des bords des deux bandes. La longueur de ce creux est une indication de la longueur de la zone de croisement du bord des bandes dans la zone de jonction; elle varie en fonction de l'importance du défaut d'alignement des bandes.

La propreté des bandes à assembler peut également être appréciée au moyen de ce profil longitudinal des temperatures. La Figure 7 en est un exemple. Elle représente un profil longitudinal des températures maximales le long d'un cordon de soudure entre deux bandes, correctement positionnées l'une par rapport à l'autre, mais dont la moitié gauche était enduite de graisse tandis que la moitié droite était propre. La partie droite du profil est régulière, tandis que la partie gauche est fortement perturbée.

Le procédé de l'invention offre un moyen fiable de contrôler la qualité d'une soudure bout à bout, ou avec un certain recouvrement, de deux bandes métalliques. Il permet également de détecter les causes de divers défauts constatés dans ces soudures, et de proposer des remèdes pour éliminer ces défauts. En particulier, la comparaison de profils de température déformés avec des profils de référence conduit à identifier des anomalies de fonctionnement de la machine de soudage ou de déroulement de la soudure et donc d'y remédier.

## Revendications

1. Procédé de contrôle de la qualité d'une soudure bout à bout de bandes métalliques, dans lequel on réalise la soudure suivant une direction transversale par rapport à l'axe longitudinal des bandes, caractérisé en ce qu'après la réalisation de ladite soudure, on établit une carte thermique de ladite soudure et de la zone thermiquement affectée au voisinage de ladite soudure et en ce que l'on vérifie que la température de points choisis de ladite carte thermique est comprise entre une valeur maximale et une valeur minimale prédéterminées, propres à chacun desdits points.

2. Procédé suivant la revendication 1, caractérisé en ce qu'à des instants prédéterminés après la réalisation de la soudure, on mesure la température d'une pluralité de plages de ladite soudure et de la zone thermiquement affectée au voisinage de ladite soudure, et en ce que l'on établit la carte thermique de ladite soudure et de la zone thermiquement affectée au voisinage de ladite soudure à partir des valeurs mesurées de la température de ladite pluralité de plages.

3. Procédé suivant l'une ou l'autre des revendications précédentes, caractérisé en ce que l'on effectue un balayage transversal du cordon de soudure, cette direction transversale étant rapportée à la direction du cordon, en une pluralité de points répartis le long dudit cordon et avec un retard aussi court que possible par rapport à la soudure auxdits points, et en ce que l'on mesure la température d'une pluralité de plages situées sur la trajectoire dudit balayage.

4. Procédé suivant l'une ou l'autre des revendications précédentes, caractérisé en ce que l'on détermine, en des points successifs répartis le long de la soudure, une pluralité de profils transversaux de température de la soudure et de la zone thermiquement affectée au voisinage de ladite soudure, en ce que l'on compare lesdits profils mesurés à au moins un profil transversal de température de référence et en ce que l'on produit un signal indiquant que l'écart entre au moins un desdits profils transversaux mesurés et au moins un desdits profils transversaux de référence atteint ou dépasse une valeur prédéterminée.

5. Procédé suivant la revendication 4, caractérisé en ce que l'on détermine lesdits profils de température transversaux avec un retard aussi constant et aussi court que possible par rapport à l'exécution de la soudure aux points respectifs considérés.

6. Procédé suivant l'une ou l'autre des revendications précédentes, caractérisé en ce que l'on détermine le profil longitudinal des températures maximales relevées le long de la soudure sur les profils transversaux successifs.

7. Procédé suivant la revendication 6, caractérisé en ce que l'on détermine la position d'une pluralité de points dudit profil longitudinal des températures maximales par rapport à la soudure.

8. Procédé suivant l'une ou l'autre des revendications 6 et 7, caractérisé en ce que l'on compare ledit profil longitudinal des températures maximales, respectivement la position des points de ce profil, à un profil longitudinal de référence, respectivement à une position de référence des points de ce profil longitudinal, et en ce que l'on produit un signal indiquant que l'écart entre le profil longitudinal déterminé et le profil longitudinal de référence, respectivement entre la position déterminée et la position de référence des points de ce profil longitudinal, atteint ou dépasse une valeur prédéterminée.

9. Procédé suivant la revendication 8, caractérisé en ce que ledit profil longitudinal de référence est une droite d'ordonnée préférée, correspondant à un niveau de température prédéterminé.

10. Procédé suivant la revendication 9, caractérisé en ce que ladite ordonnée est déterminée par un système expert tenant compte de la nature et des épaisseurs des bandes à assembler, ainsi que des conditions de soudage à appliquer.

## Claims

1. Process for monitoring the quality of a butt weld between metal strips, according to which one carries out the welding following a direction which is transverse with respect to the longitudinal axis of the strip, characterized in that, following the achievement of the said weld, one establishes a thermal chart of the said weld and of the heat affected zone in the vicinity of the said weld, and in that one verifies that the temperature of selected points of the said thermal chart is comprised between predetermined maximum and minimum values, particular for each of the said points.

2. Process according to the claim 1, characterized in that at predetermined moments following the achievement of the weld, one measures the temperature of a plurality of areas of the said weld and of the heat affected zone in the vicinity of the said weld, and in that one establishes the thermal chart of the said weld and of the heat affected zone in the vicinity of the said weld taking as a basis the measured values of the temperature of the said plurality of areas.

3. Process according to the one or the other of the preceding claims, characterized in that one carries out a transverse scanning of the weld seam, this transverse direction being related to the direction of the weld seam, at a plurality of points distributed along the said weld seam and with a delay which is as short as possible with respect to the welding at the said points, and in that one measures the temperature of a plurality of areas situated on the path of the said scanning.

4. Process according to the one or the other of the preceding claims, characterized in that one determines, for successive points distributed along the weld seam, a plurality of transverse temperature profiles of the weld and of the heat affected zone in the vicinity of the said weld, in that one compares the said measured profiles to at least one reference transverse temperature profile and in that one generates a signal indicating that the difference between at least one of the said measured transverse profiles and at least one of the said reference transverse profiles reaches or exceeds a predetermined value.

5. Process according to claim 4, characterized in that one determines the said transverse temperature profiles with a delay which is as constant and as short as possible with respect to the execution of the weld at the respective considered points.

6. Process according to the one or the other of the preceding claims, characterized in that one determines the longitudinal profile of the maximum temperatures registered along the weld on the successive transverse profiles.

7. Process according to claim 6, characterized in that one determines the position of a plurality of points of the said longitudinal profile of the maximum temperatures with respect to the weld.

8. Process according to the one or the other of the claims 6 and 7, characterized in that one compares the said longitudinal profile of the maximum temperatures, respectively the position of the points of this profile, to a longitudinal reference profile, respectively to a reference position of the points of this longitudinal profile, and in that one generates a signal indicating that the difference between the determined longitudinal profile and the longitudinal reference profile, respectively between the determined position and the reference position of the points of this longitudinal profile, reaches or exceeds a predetermined value.

9. Process according to the claim 8, characterized in that the said longitudinal reference profile is a straight line of preferred ordinate, corresponding to a predetermined temperature level.

10. Process according to the claim 9, characterized in that the said ordinate is determined by an expert system taking into account the nature and the thicknesses of the strip to be assembled, as well as the welding conditions to apply.

## Patentansprüche

1. Verfahren zur Überwachung der Qualität einer Stumpfnaht zwischen Metallbändern, bei welchem man die Schweißnaht entlang einer quer in Bezug auf die Längsachse der Bänder verlaufenden Richtung ausführt, dadurch gekennzeichnet, daß man nach der Ausführung der besagten Schweißnaht eine thermische Karte der besagten Schweißnaht sowie der thermisch beeinflußten Zone in der Umgebung der besagten Schweißnaht aufstellt und daß man nachprüft daß die Temperatur von auf der besagten thermischen Karte gewählten Punkten zwischen einem festgelegten maximalen Wert und einem festgelegten minimalen Wert liegt, Werte die einem jeden der besagten Punkte eigen sind.

2. Verfahren gemäß dem Patentanspruch 1, dadurch gekennzeichnet, daß man an festgelegten Momenten, anschließend an die Ausführung der Schweißnaht, die Temperatur an einer Vielzahl von Bereichen der besagten Schweißnaht sowie der thermisch beeinflußten Zone in der Umgebung der besagten Schweißnaht mißt, und daß man die thermische Karte der besagten Schweißnaht sowie der thermisch beeinflußten Zone in der Umgebung der besagten Schweißnaht aufstellt, dies auf der Basis der gemessenen Werte der Temperatur der besagten Vielzahl von Bereichen.

3. Verfahren gemäß dem einen oder dem anderen der vorhergehenden Patentansprüche, dadurch gekennzeichnet, daß man eine querverlaufende Abtastung der Schweißnaht durchführt, wobei diese Querrichtung auf die Richtung der Schweißnaht bezogen ist und die Abtastung an einer Vielzahl von entlang der besagten Schweißnaht verteilten Punkten und mit einer Verzögerung, die so kurz wie möglich in Bezug auf die Schweißenanlegung an den besagten Punkten ist, durchgeführt wird, und daß man die Temperatur einer Vielzahl von auf der Strecke der besagten Abtastung gelegten Bereichen mißt.

4. Verfahren gemäß dem einen oder dem anderen der vorhergehenden Patentansprüche, dadurch gekennzeichnet, daß man an bestimmten entlang der Schweißnaht verteilten aufeinanderfolgenden Punkten eine Vielzahl von Temperaturquerprofilen der Schweißnaht sowie der thermisch beeinflußten Zone in der Umgebung der besagten Schweißnaht bestimmt, daß man die besagten gemessenen Profile mit mindestens einem Referenztemperaturquerprofil vergleicht und daß man ein Signal erzeugt, welches anzeigt wenn die Abweichung zwischen mindestens einem der besagten gemessenen Querprofile und mindestens einem der besagten Referenzquerprofile einen festgelegten Wert erreicht oder überschreitet.

5. Verfahren gemäß Patentanspruch 4, dadurch gekennzeichnet, daß man die besagten Temperaturquerprofile mit einer Verzögerung bestimmt, welche so konstant und so kurz wie möglich in Bezug auf die Ausführung der Schweißnaht an den jeweiligen berücksichtigten Punkten ist.

6. Verfahren gemäß dem einen oder dem anderen der vorhergehenden Patentansprüche, dadurch gekennzeichnet, daß man das Längsprofil der maximalen Temperaturen bestimmt, welche entlang der Schweißnaht an den aufeinanderfolgenden Querprofilen aufgenommen werden.

7. Verfahren gemäß dem Patentanspruch 6, dadurch gekennzeichnet, daß man die Position einer Vielzahl von Punkten des besagten Längsprofils der maximalen Temperaturen in Bezug auf die Schweißnaht bestimmt.

8. Verfahren gemäß dem einen oder dem anderen der Patentansprüche 6 und 7, dadurch gekennzeichnet, daß man das besagte Längsprofil der maximalen Temperaturen, beziehungsweise die Position der Punkte dieses Profils in Vergleich stellt mit einem Referenzlängsprofil, beziehungsweise mit einer Referenzposition der Punkte dieses Längsprofils und daß man ein Signal erzeugt, welches anzeigt wenn die Abweichung zwischen dem bestimmten Längsprofil und dem Referenzlängsprofil, beziehungsweise zwischen der bestimmten Position und der Referenzposition der Punkte dieses Längsprofils einen festgelegten Wert erreicht oder überschreitet.

9. Verfahren gemäß dem Patentanspruch 8, dadurch gekennzeichnet, daß das besagte Referenzlängsprofil eine bevorzugte Ordinatenlinie ist, welche einem festgelegten Temperaturwert entspricht.

10. Verfahren gemäß dem Patentanspruch 9, dadurch gekennzeichnet, daß die besagte Ordinate durch ein Expertensystem bestimmt wird, welches der Natur und der Dicke der zu vereinigenden Bänder, sowie der anzuwendenden Schweißbedingungen Rechnung trägt.
